# EUROPEAN PATENT SPECIFICATION

(11) **EP 1 917 780 B1**
(45) Date of publication and mention of the grant of the patent: **06.10.2010**
(21) Application number: 06795753.0
(22) Date of filing: 23.08.2006
(51) Int. Cl.: H04L 29/06

(54) **SYSTEM AND METHOD FOR PROCESSING SECURE TRANSMISSIONS**
SYSTEM UND VERFAHREN ZUM VERARBEITEN SICHERER ÜBERTRAGUNGEN
SYSTEME ET PROCEDE POUR TRAITER DES TRANSMISSIONS SECURISEES

(30) Priority: 23.08.2005 GB 0517303
(43) Date of publication of application: 07.05.2008
(73) Proprietor: Netronome Systems Inc, 104 Hills Road Cambridge CB2 1LQ (GB)
(72) Inventor: DU TOIT, Roelof, Nico, 0157 Gauteng Province (ZA); VAN LEEUWEN, Gysbert, Floris, van Beek, 0181 Gauteng Province (ZA)
(74) Representative: Nash, David Allan
(86) International application number: PCT/IB2006/052926
(87) International publication number: WO 2007/023465

(56) References cited:
- EP-A- 1 699 204
- WO-A-01/63879
- US-A1- 2002 073 232
- US-B1- 6 393 568

## Description

THIS INVENTION relates to an apparatus and method for processing secure digital electronic transmissions.

In the related art, WO 01/63879 discloses content screening with end-to-end encryption: US 6,393,568 describes an encryption and decryption system and method with content analysis provision; US 2002/0073232 describes a non-intrusive multiplexed transaction persistency in secure commerce environments; and EP 1699204 discloses decryption apparatus for use in encrypted communications.

According to the invention there is provided an apparatus for processing a secure digital electronic transmission from a first device to a second device, which includes a determining means for determining whether the transmission needs to be decrypted; a decrypting information obtaining means for obtaining information required to decrypt the encrypted content, from the first or the second device or both, if decryption of the encrypted content is required; a decrypting means for decrypting the encrypted content of the transmission; and a deploying means for deploying at least a part of the decrypted content to an entity.

The apparatus includes a transmission ID supplying and identifying means for supplying an ID for each transmission from the first device when it is initiated and for identifying the ID of a transmission subsequently.

The determining means provides a policy tag for each transmission, that is associated with the ID of that transmission, the tag indicating whether or not any content is to be decrypted.

The apparatus may further include a re-encrypting means for re- encrypting material to be sent to the second device. The determining means may also determine if material associated with a transmission is to be re-encrypted and for supplying a policy tag which indicates that the material is to be re-encrypted.

Further, the apparatus may include a bypass means for routing at least a part of the original encrypted content of a transmission to the second device. The determining means may then also determine if the original encrypted content, or part thereof, should be supplied to the second device via the bypass means and supply a policy tag which indicates that that transmission may be bypassed.

It will be appreciated that, in use, the apparatus will also receive unsecured traffic. The apparatus may thus also have a detecting means for detecting a secure transmission, the determining means then determining if a secure transmission that has been detected is to be decrypted. Any unsecured transmissions may also be bypassed via the bypass means.

The determining means may determine if a transmission needs to be decrypted, when the transmission is initiated. Alternatively the determining means may determine if a transmission needs to be decrypted, subsequent to initiation of the transmission. In addition, even if the determining means determines that a transmission should be decrypted, this determination could subsequently be changed to a determination that the transmission need not be decrypted and decryption is terminated. The determining means then also initially supplies a policy tag which indicates that decryption is required and then a modified tag that decryption is not required. The original encrypted content may then be supplied to the second device.

The entity to which the decrypted content is deployed may process, store or forward the content. An appropriate entity to which the decrypted content is deployed may be determined by the determining means and it may also select the entity to which the decrypted content should be deployed and supply a policy tag which indicates the identity of the selected entity.

The re-encrypting means may re-encrypt material and forward it to the second device in response to a signal from the selected entity.

The deploying means may deploy the decrypted content to the selected entity in a read-only form or in a modifiable form. If the decrypted content is sent to the selected entity in a modifiable form, the selected entity may modify it and return it. The deploying means may then include a receiving means for receiving the modified content from the selected entity. The modified content received from the selected entity may then be re-encrypted by the re-encrypting means and forwarded to the second device.

The apparatus may, still further, include a transmission blocking means for blocking forwarding of at least a part of the transmission to the second device.

Further according to the invention there is provided a method of processing a secure digital electronic transmission from a first device to a second device, which includes
determining whether the transmission needs to be decrypted;
obtaining information required to decrypt the encrypted content, from the first or the second device or both, if decryption of the encrypted content is required;
decrypting the encrypted content of the transmission: and deploying the decrypted content to an entity.

The method may include supplying an ID for each transmission from the first device when it is initiated and for identifying the ID of a transmission subsequently.

The method may also include providing a policy tag for each transmission, that is associated with the ID of that transmission, the tag indicating whether or not any content is to be decrypted.

In addition, the method may include re-encrypting material to be sent to the second device. If re-encrypting is to be performed, an appropriate policy tag is supple which indicates that the material is to be re-encrypted.

As indicated above, if the content need not be decrypted, at least a part of the original encrypted content of a transmission may be routed to the second device via a bypass route. Thus, the method may include determining if the original encrypted content, or part thereof, should be routed to the second device via the bypass route and supplying a policy tag which indicates that that transmission should be bypassed.

Determining whether a transmission needs to be decrypted may occur when the transmission is initiated or subsequent to initiation of the transmission. An initial determination may be made that encryption is required, which is subsequently changed to a determination that decryption is not required.

The decrypted content may be processed, stored or forwarded by the entity. The decrypted content may be deployed to a plurality of entities. A desired entity to which at least a part of the decrypted content should be deployed may be selected. A policy tag which indicates that at least a part of the decrypted content is to be deployed to the selected entity may then be supplied.

The decrypted content may be deployed to the selected entity in a read-only or modifiable form. The re-encrypted version of the decrypted content may then be sent to the second device in response to a signal from the selected entity.

If the selected entity modifies the material it receives, this modified material may be returned. This modified material may then be re-encrypted and sent to the second device.

At least a part of the transmission may be blocked, and not sent to the second device.

In order to cater for unsecured traffic, the method may include detecting that a transmission is a secured transmission.

From the above it will be appreciated that a secured transmission may be forwarded to the second device unmodified or modified, decrypted, unchanged but re-encrypted or in a modified and then re-encrypted form.

Further from the above, it will be appreciated that the entities may merely examine the decrypted material or process it. Thus, the decrypted material may be examined in order to detect any notable content, for example, illicit activity. The decrypted material may also be filtered to prevent intrusion. The decrypted material may turner be packaged in a format suitable for a further application, depending on the application, such that to the application it appears as if the traffic was not encrypted prior to such packaging.

The entity may be a software module or program, an information processing device, a network node which forwards or processes information such as a router or server, or any combination thereof. As indicated above the further entity may be passive in the sense that it does not modify the decrypted material or active, in which case it is able to modify the said material.

The decrypted material may be sent to the entity via an Application Program Interface or as a stream and the apparatus may thus have a stream generator component. The provision of a stream generator component may thus allow standard, unmodified applications which have been designed to operate on plain non-encrypted text to operate on the decrypted material.

The transmission may be in datagram or packet form.

The decrypting information obtaining means may have a key agreement component for providing the required information to decrypt and re-encrypt the transmission. This component procures the negotiated encryption algorithm(s), session key(s), and any random "obfuscator" or "seed" information.

In the event that the apparatus determines that a transmission need not be decrypted, or in the event that the apparatus determines that decryption is required but that no further entity needs to modify the decrypted information, the apparatus may not terminate a connection in which the cryptographic session is embedded, such as a Transmission Control Protocol (TCP) connection in which SSL/TLS traffic is embedded.

In those instances where the apparatus determines that the transmission has to be decrypted, the apparatus may terminate the connection in which the cryptographic session is embedded, and the apparatus may originate a new connection and transmission to the second device. The second device may not be aware that this "highjacking" has occurred. Thus, the address(es) or other connection identifiers, such as TCP ports, at each layer of the apparatus may be set to the same address(es) and identifiers that the first and second devices used. In the event that the protocol being used does not permit substitution of addresses or other connection specific identifiers, then substitutions would not be made.

If the entity to which the decrypted material is to be deployed may only modify data and may not insert or remove data nor change the way in which the data is divided into datums or packets, then only the payload of the transmission may be modified by the apparatus. In this mode, if a stream generator is used, the stream generator component may send data to the further entity and receive the data as modified by the entity. In this case, the further entity is most likely to be a physical entity, such as an appliance or an appliance running on a server, where multiple physical network or communication links can be attached to the entity or the platform on which the entity is hosted: a virtual entity, such as a virtual machine, running in the apparatus or elsewhere, where the traffic can be made available to the entity or obtained after the entity has processed the traffic via Virtual Network Interface Cards (VNICs); or an application which has been designed or configured to interact with the stream generator by sending information it received back to the stream generator after processing the information.

The apparatus may comprise a gateway which is part of a network. The gateway may be connected in the network in such a way that network traffic or other communications are forced to traverse the gateway. Thus the gateway may be a router, a switch, or a "bump in the wire" bridge. Further, the gateway may comprise one or more processor or co-processor. If it has a plurality of processors, they may be connected using a real trusted link, such as shared memory, a traditional server backplane bus like PCI Express, or a network link like Gigabit Ethernet; or are linked using a channel that is secure by virtue of it being encrypted.

The first device may be a client and the second device a server. The client may establish a secure communication session with the server using Secure Sockets Layer (SSL) or Transport Layer Security (TLS) protocols as a security layer. The transport layer may be TCP.

The determining means may use a variety of criteria in determining whether the transmission needs to be decrypted. These criteria may include the port or interface of the apparatus to which the client is attached; the port or interface to which the server is attached; source and destination addresses of the client and server; other source and destination intra-device or application identifier; fields in a server public key certificate or client public key certificate; information with respect to negotiated encryption algorithms; the content of the transmission.

If the criterion used is a source or destination address, then the group to which it belongs may be considered. For example, it may be from a trusted or untrusted source, a public or private source, or an own or other organization.

Similarly, if fields in a public key certificate or information with respect to the encryption algorithms are considered, then they may be compared to constants or ranges, or may be matched against arbitrary patterns such as regular expressions.

If transmission content is considered, then information such as an application protocol identifier or an identification of the initiating or target entity may be referred to. In regard to the latter, a username or resource being accessed may be relevant. Further, the information considered may be in a part of the transmission that is not encrypted or is encrypted. Examples of a protocol where an unencrypted part precedes an encrypted part are SMTP, POP3 or IMAP with the STARTTLS option, where the client issues the STARTTLS command to request commencement of TLS encryption.

It will be appreciated that the first and second devices could be nodes in a network which establish peer to peer communication sessions. Depending on the encryption protocol used, differences between the communicating parties may still exist. For example, one party may act as an initiator, with the other party being a target.

Components of the apparatus could be implemented as tasks or modules in a real time operating system or a virtual machine hypervisor layer, as components in an operating system kernel, as user level libraries, components or applications, as software running directly on hardware, without an intervening operating system, or as hardware coprocessors implemented in fixed or reconfigurable devices,

The apparatus and method are also applicable to tunnels or other transmissions between devices that are not encrypted, such as traffic that is compressed, encoded, or encapsulated. In this case the benefit of the apparatus remains that it is able to identify which transmissions are of interest and package or relay these transmissions in an appropriate form for examination or processing by a further entity.

It will further be appreciated that for each datum, such as a network packet or other piece of information, traversing the apparatus, the apparatus identifies the transmission to which the datum belongs. Thus concurrent transmissions being transmitted across the same network or other communication channel or medium are separated.

In addition, it will be appreciated that, after identifying a transmission, the apparatus determines a policy to be associated with that transmission. The policy may encompass the following elements:
whether the transmission is to be decrypted or whether it may pass through the apparatus unchanged:
   to which destinations and via which mechanisms, protocols or encapsulations the decrypted information needs to be forwarded; and
   in which mode the apparatus should operate for that transmission, e.g. allow only read only access to the decrypted material or allow read- write access.

If the policy associated with a transmission is known, the policy may merely be applied. If the policy has not been formulated then information in the datum may be analysed to determine the required policy.

In the event that it is determined that no further entity needs to receive the decrypted material, that component of the apparatus that communicates the decrypted material may be disabled or rendered idle. If supported by the encryption protocol, the apparatus could enable triggering of a new session key negotiation process to remove the need to decrypt and re-encrypt the transmission. Further, in those cases where the original encrypted transmission is identical to the decrypted and re- encrypted transmission, the transmission may merely be forwarded once it has been determined that decryption is not required, or after decryption, but without re- encryption. This optimization will be possible if the negotiated encryption protocols, algorithms and parameters are compatible with this scheme. In the case of SSL/TLS the same session key should be negotiated on the client to the apparatus leg and the apparatus to the server leg of the connection. This requires that the random data exchanged during the key agreement process be forwarded by each party to the other without modification; and that the encryption algorithm should not use Cypher Block Chaining. An example of a suitable algorithm is a stream cipher like RC4/ARCFOUR. The advertised algorithms could be changed during the session key agreement phase to ensure this.

If the transmission is modified by the apparatus replacing the original certificate supplied by the first device or the second device with a certificate issued to the address / hostname of the server and signed by a certifying authority which is trusted by the first and second devices, without the apparatus modifying the latter certificate, then a warning or error message will probably result because the name in the certificate will not match the destination host name or IP address. Thus, resigning of certificates is preferred.

In order to cause a device to accept a resigned certificate Without displaying warning, the Certification Authority (CA) certificate belonging to the apparatus needs to be installed into such device. The CA certificate may be installed by :
- modifying streams by injecting HTML/XML tags, or other information as appropriate to the protocol and content, which cause the device to either temporarily access information on the apparatus or to access information on the apparatus while concurrently loading the originally requested information, where the information supplied by the apparatus has the side effect of installing a CA certificate. For example, it is a CA certificate itself, or causes an ActiveX, Java or other plugin to be invoked which, when executed, installs the CA certificate; or
- distributing the CA certificate via a remote automated software installation, remote desktop configuration, or other central management mechanism.

The stream generator component may make the decrypted material available as a stream to a further entity running on another processor, a further entity running on a processor forming part of the apparatus, or a further entity attached to the same network as the apparatus, or a combination thereof. The stream generator may supply a variety of stream types, including to TCP, Sockets Direct Protocol (SDP), or the like. The stream generator may include the original packet or stream header information such as TCP destination or source addresses or source or destination ports. Instead, the stream generator may modify this information in order to accommodate the requirements of an attached application, Stream content may likewise be modified, for example by modifying stream content to reflect that data was not originally encrypted, or by adding stream content to reflect that data was encrypted or to communicate some of the original stream parameters, such as certificate fields, original addresses and ports, to the attached application. This will enable a further entity to gain access to decrypted material without requiring modifications to the hardware or software of the further entity.

It will be understood that the entity that will receive a stream, the required modifications to the stream, and other stream related parameters will be governed by the configured set of policies. As the policy to be followed is determined by transmission classification and identification components, different policies may be defined for various categories of transmissions, and the invention extends to the definition of such policies.

In regard to passive entities, the stream generator may ignore the payload of data packets or other datums supplied by such entities, while performing all processing required to ensure that communication of the stream is maintained, such as performing handshake steps to establish the stream and processes and send acknowledgments. In this case the stream generator may detect and process a variety of stream related control messages or packets supplied by a passive further entity, such as ICMP port unreachable or TCP RESET messages. An appropriate action defined by the apparatus configuration and the transmission handling policy is taken, for example, if the decrypted stream to the further entity cannot be established or is torn drown, the apparatus can tear down the encrypted streams to the first or second device.

The invention is now described by way of example with reference to the accompanying diagrammatic drawing which shows
schematically an apparatus in accordance with the invention connected between a client and a server.

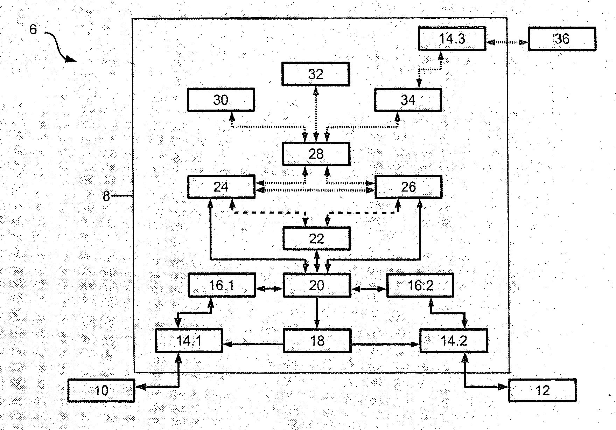

Preferring to the drawing 1 an apparatus for processing a secure digital electronic transmission in accordance with the invention is designated generally by reference numeral 6. The apparatus 6 comprises a gateway 8 which is connected between a client 10 and a server 12. The gateway 8 is part of a network and is connected such that network traffic between the client 10 and server 12 is forced to traverse the gateway 8.

The client 10 is connected to the gateway 8 via a network interface 14.1 and the server 12 via a network interface 14.2. The interface 14.1 is connected to a first transmission ID and policy tag module 16.1. The interface 14.2, in turn, is connected to a second transmission ID and policy tag module 16.2. The transmission ID and policy tag modules 16.1 and 16.2 provide an ID for each transmission when it is first received and apply a tag for each transmission indicating whether content of the transmission is to be decrypted. Subsequently, when further traffic of the transmission is received, the transmission ID and policy tag modules
16.1 and 16.2 recognise the transmission, identify its ID and then apply the policy according to the associated tag. It will be appreciated that the transmission ID and policy tag module 16.1 attends to transmissions coming from the client 10 and the transmission ID and policy tag module 16.2 attends to transmissions coming from the server 12.

The gateway 8 has a unit 20 which detects if a transmission is secure and, if so, whether content thereof needs to be decrypted. It then supplies the transmission ID and policy tag modules 16.1 and 16.2 with the appropriate policy for the relevant tag.

A bypass component 18 is provided to pass transmissions directly between the interfaces 14.1 and 14.2 without having to route through the other components referred to below.

A decrypting information obtaining means for obtaining information required to decrypt the encrypted content and to re-encrypt content is provided in the form of a key agreement component 22. The key agreement component 22 ensures that the gateway 8 has the required information to enable transmissions received from the client 10 and the server 12 to be decrypted and re-encrypted as will be explained below.

The gateway 8 also has "crypting" components 24 and 26. Each crypting component 24, 26 is able to decrypt and re-encrypt material. The gateway 8 further has a deploying and receiving module 28, a processor 30, a store 32 and a forwarding module 34. The forwarding module 34 is connected to a further interface 14.3 whereby the gateway communicates with an external application 36.

In use, the client 10 establishes a secure communication session with the server 12 using a SSL or TLS protocol as a security layer with a TCP transport layer. A first flow results between the client 10 and the server 12. Packets belonging to this first flow enter the gateway via the network interface 14.1. The unit 20 detects that an encrypted, secure transmission has been received. It then determines a decryption policy, ie whether decryption is required and to which further entity the plain text resulting from the decryption needs to be sent, using the criteria and policies discussed above. This decryption policy is then tagged with the ID of the transmission by the transmission ID and policy tag module 16.1. If content of the transmission is to be decrypted, the appropriate decrypting information is acquired from the client 10 and the server 12. The relevant content is then decrypted by the crypting component 24.

As indicated above, the key agreement component 22 acquires the necessary information to decrypt the transmission and supplies this information to the crypt component 24. As discussed earlier, this information may include the encryption algorithm negotiated between the client 10 and the server 12, a session key and random obfuscator and/or seed information. The key agreement component 22 acts as a server from the perspective of the client 10 and as the client with respect to the server 12.

Once the key agreement process has been completed, packets belonging to the transmission are sent to the crypting component 24. The transmission from the first client 10 to the server 12 is then decrypted by the crypting component 24 to provide a plain text version of the transmission. The resulting plain text is then sent via the deploying and receiving module 28 and deployed either to the processor 30, the store 32 or the application 36. Further as discussed above, if the plain text is sent to a passive entity such as the store 32, it is sent in read only form, whereas it is in a read - write form if sent to an active entity such as the processor 30 or the application 36. The plain text version may be sent as a stream. As explained above, by packaging the plain text into a new stream, standard, unmodified applications which have been designed to operate on plain text can be utilized.

The processor 30 examines the plain text to detect any illicit material. If no illicit material is detected, then an instruction is sent to the crypting component 26 to re-encrypt the plain text from the first flow, using information supplied by the unit 20, and deliver it to the server 12 via the interface 14.2.

Similarly, the application 36 processes the plain text supplied by the crypting component 24 and returns modified plain text to the crypting component 26 to be re-encrypted and forwarded to the server 12.

In the event that the unit 20 determines that a transmission does not need to be decrypted, it is routed to the bypass 18 and delivered directly to the target.

With active entities such as the processor 30 and application 36, as discussed above, the apparatus 6 operates in a read - write decrypting and re-encrypting mode. In this mode, in most cases, the flow between the client 10 and the server 12 is terminated at the gateway 8, with the gateway originating a new flow to the server 12.

Those skilled in the art will appreciate that traffic from the server 12 to the client 10 is treated similarly, being decrypted by the crypt unit 26 and re-encrypted by the crypt unit 24, where appropriate.

## Claims

1. An apparatus (6) for processing a secure digital electronic transmission from a first device (10) to a second device (12), which includes
a determining means (16.1, 20) for determining whether the transmission needs to be decrypted;
a decrypting information obtaining means (22) for obtaining information required to decrypt the encrypted content, from the first or the second device (10, 12) or both, if decryption of the encrypted content is required;
a decrypting means (24, 26) for decrypting the encrypted content of the transmission if decryption is required; and
a deploying means (28) for deploying at least a part of the decrypted content to an entity;
**characterised in that** the apparatus further comprises:
a transmission ID supplying and identifying means (16.1) for supplying an ID for each transmission from the first device (10) when it is initiated and for identifying the ID of a transmission subsequently;
and that the determining means is also for providing a policy tag for each transmission, that is associated with the ID of that transmission, the tag indicating whether or not any content is to be decrypted;

2. The apparatus (6) claimed in claim 1, which includes a re-encrypting means (24, 26) for re-encrypting material to be sent to the second device (12).

3. The apparatus claimed in claim 2, in which the determining means (16.1, 20) is also configured to determine if material associated with a transmission is to be reencrypted and supply a policy tag which indicates that the material is to be re-encrypted.

4. The apparatus (6) claimed in claim 1, which includes a bypass means (18) for routing at least a part of the original encrypted content of a transmission to the second device (12).

5. The apparatus (6) claimed in claim 4, in which the determining means (16.1, 20) is also configured to determine if the original encrypted content, or part thereof, should be supplied to the second device (12) via the bypass means (18) and supply a policy tag which indicates that that transmission may be bypassed.

6. The apparatus (6) claimed in claim 1, in which the determining means (16.1, 20) is configured to determine if a transmission needs to be decrypted, when the transmission is initiated.

7. The apparatus (6) claimed in claim 1, in which the determining means (16.1, 20) is configured to determine if a transmission needs to be decrypted, subsequent to initiation of the transmission.

8. The apparatus (6) claimed in claim 6 or claim 7, in which the determining means (16.1, 20) is configured to subsequently determine that the transmission need not be decrypted and decryption is terminated after determining that decryption should occur.

9. The apparatus (6) claimed in claim 1, in which the entity is selected from the group comprising a processing means (30), a storage means (32) and a forwarding means (34).

10. The apparatus (6) claimed in claim 9, in which the determining means (16.1, 20) is also configured to determine the selected entity to which the decrypted content should be deployed and supply a policy tag which indicates the identity of the selected entity.

11. The apparatus (6) claimed in claim 9, in which the deploying means (28) is configured to deploy the decrypted content to the selected entity in a read-only form.

12. The apparatus (6) claimed in claim 11, which includes a re-encrypting means (24, 26) for re-encrypting material and in which the decrypted content is re-encrypted and is forwarded to the second device (12) in response to a signal from the selected entity.

13. The apparatus (6) claimed in claim 9, in which the deploying means (28) is configured to deploy the decrypted content to the selected entity in a modifiable form.

14. The apparatus (6) claimed in claim 13, in which the deploying means (28) includes a receiving means for receiving content from the selected entity.

15. The apparatus (6) claimed in claim 14, which includes a re-encrypting means (24, 26) for re-encrypting material and in which the content received from the selected entity is re-encrypted and forwarded to the second device (12).

16. The apparatus (6) claimed in claim 1, which includes a transmission blocking means for blocking forwarding of at least a part of the transmission to the second device (12).

17. The apparatus (6) claimed in claim 1, in which the determining means (16.1, 20) is configured to provisionally determine that a transmission needs to be decrypted and then subsequently determine that it need not be decrypted, the determining means (16.1, 20) then being configured to initially supply a policy tag which indicates that decryption is required and then a modified tag that decryption is not required.

18. The apparatus (6) as claimed in claim 1, which includes a detecting means for detecting a secure transmission.

19. A method of processing a secure digital electronic transmission from a first device to a second device, the method being carried out by an apparatus (6) and which includes
determining whether the transmission needs to be decrypted;
supplying an ID for each transmission from the first device when it is initiated and for identifying the ID of a transmission subsequently;
providing a policy tag for each transmission, that is associated with the ID of that transmission, the tag indicating whether or not any content is to be decrypted;
obtaining information required to decrypt the encrypted content, from the first or the second device or both, if decryption of the encrypted content is required;
decrypting the encrypted content of the transmission if decryption is required; and deploying the decrypted content to an entity.

20. The method claimed in claim 19, which includes re-encrypting material to be sent to the second device.

21. The method claimed in claim 20, which includes determining if material associated with a transmission is to be re-encrypted and supplying a policy tag which indicates that the material is to be re-encrypted.

22. The method as claimed in claim 19, which includes routing at least a part of the original encrypted content of a transmission to the second device via a bypass route.

23. The method claimed in claim 22, which includes determining if the original encrypted content, or part thereof, should be routed to the second device via the bypass route and for supplying a policy tag which indicates that that transmission should be bypassed.

24. The method claimed in claim 19, in which determining whether a transmission needs to be decrypted occurs when the transmission is initiated.

25. The method claimed in claim 19, in which determining whether a transmission needs to be decrypted occurs subsequent to initiation of the transmission.

26. The method claimed in claim 24 or claim 25, which includes subsequently determining that the transmission need not be decrypted and terminating decryption after initially determining that decryption should occur.

27. The method claimed in claim 19, which includes processing, storing or forwarding the decrypted content by the entity.

28. The method claimed in claim 19, in which the decrypted content may be deployed to a plurality of entities and which includes determining a selected entity to which at least a part of the decrypted content should be deployed and supplying a policy tag which indicates that at least a part of the decrypted content is to be deployed to the selected entity.

29. The method claimed in claim 28, in which the decrypted content is deployed to the selected entity in a read-only form.

30. The method claimed in claim 29, which includes re-encrypting the decrypted content and forwarding the re-encrypted content to the second device in response to a signal from the selected entity.

31. The method claimed in claim 28, in which the decrypted content is deployed to the selected entity in a modifiable form.

32. The method claimed in claim 31, which includes receiving content from the selected entity.

33. The method claimed in claim 32, which includes re-encrypting the content received from the selected entity and forwarding it to the second device.

34. The method claimed in claim 19, which includes blocking forwarding of at least a part of the transmission to the second device.

35. The method claimed in claim 19, which includes provisionally determining that a transmission needs to be decrypted and then subsequently determining that it need not be decrypted, and also initially supplying a policy tag which indicates that decryption is required and then a modified tag that decryption is not required.

36. The method claimed in claim 19, which includes detecting that a transmission is a secured transmission.

37. A system comprising a first device, second device and an apparatus as claimed in any one of claims 1 to 18.

## Patentansprüche

1. Gerät (6) zur Abwicklung einer sicheren digitalen elektronischen Übermittlung von einer ersten Vorrichtung (10) zu einer zweiten Vorrichtung (12), umfassend:
eine Ermittlungseinrichtung (16.1, 20) zum Ermitteln, ob die Übermittlung entschlüsselt werden muss;
eine Einrichtung (22) zum Einholen von Entschlüsselungsinformation, die die zur Entschlüsselung des verschlüsselten Inhalts benötigte Information von der ersten oder der zweiten Vorrichtung (10, 12) oder von beiden einholt, wenn eine Entschlüsselung des verschlüsselten Inhalts erforderlich ist;
eine Entschlüsselungseinrichtung (24, 26) zum Entschlüsseln des verschlüsselten Inhalts der Übermittlung, wenn eine Entschlüsselung erforderlich ist; und
eine Aushändigungseinrichtung (28) zum Aushändigen mindestens eines Teils des entschlüsselten Inhalts an eine Einheit;
**dadurch gekennzeichnet, dass** das Gerät zudem umfasst:
eine Übermittlungs-ID-Zuweisungs- und Identifikationseinrichtung (16.1) zum Zuweisen einer ID für jede Übermittlung von der ersten Vorrichtung (10), wenn die Übermittlung eingeleitet wird, und zum nachträglichen Identifizieren der ID einer Übermittlung;
und **dadurch**, dass die Ermittlungseinrichtung zudem einen Verfahrensweise-Anhang für jede Übermittlung bereitstellt, der mit der ID dieser Übermittlung verbunden ist, wobei der Anhang anzeigt, ob irgendwelcher Inhalt entschlüsselt werden muss oder nicht.

2. Gerät (6) nach Anspruch 1, umfassend eine Wiederverschlüsselungseinrichtung (24, 26) zum Wiederverschlüsseln von Material, das an die zweite Vorrichtung (12) gesendet werden soll.

3. Gerät nach Anspruch 2, wobei die Ermittlungseinrichtung (16.1, 20) zudem so konfiguriert ist, dass sie ermittelt, ob Material in Verbindung mit einer Übermittlung wiederverschlüsselt werden muss, und einen Verfahrensweise-Anhang liefert, der anzeigt, dass das Material wiederverschlüsselt werden muss.

4. Gerät (6) nach Anspruch 1, umfassend eine Nebenschlusseinrichtung (18) zum Senden mindestens eines Teils des ursprünglichen verschlüsselten Inhalts einer Übermittlung an die zweite Vorrichtung (12).

5. Gerät (6) nach Anspruch 4, wobei die Ermittlungseinrichtung (16.1, 20) zudem so konfiguriert ist, dass sie ermittelt, ob das ursprüngliche verschlüsselte Material oder ein Teil davon an die zweite Vorrichtung (12) über die Nebenschlusseinrichtung (18) geschickt werden sollte, und einen Verfahrensweise-Anhang liefert, der anzeigt, dass diese Übermittlung auf dem Nebenschlussweg gesendet werden kann.

6. Gerät (6) nach Anspruch 1, wobei die Ermittlungseinrichtung (16.1, 20) so konfiguriert ist, dass sie ermittelt, ob eine Übermittlung entschlüsselt werden muss, wenn die Übermittlung eingeleitet wird.

7. Gerät (6) nach Anspruch 1, wobei die Ermittlungseinrichtung (16.1, 20) so konfiguriert ist, dass sie ermittelt, ob eine Übermittlung entschlüsselt werden muss, nachdem die Übermittlung eingeleitet worden ist.

8. Gerät (6) nach Anspruch 6 oder Anspruch 7, wobei die Ermittlungseinrichtung (16.1, 20) so konfiguriert ist, dass sie nachträglich ermittelt, dass die Übermittlung nicht entschlüsselt werden muss, und die Entschlüsselung beendet wird, nachdem ermittelt wurde, dass eine Entschlüsselung erfolgen sollte.

9. Gerät (6) nach Anspruch 1, wobei die Einheit ausgewählt ist aus der Gruppe mit einer Verarbeitungseinrichtung (30), einer Speichereinrichtung (32) und einer Weiterleitungseinrichtung (34).

10. Gerät (6) nach Anspruch 9, wobei die Ermittlungseinrichtung (16.1, 20) zudem so konfiguriert ist, dass sie die ausgewählte Einheit ermittelt, an die der entschlüsselte Inhalt ausgehändigt werden sollte, und einen Verfahrensweise-Anhang liefert, der die Identität der ausgewählten Einheit anzeigt.

11. Gerät (6) nach Anspruch 9, wobei die Aushändigungseinrichtung (28) so konfiguriert ist, dass sie den entschlüsselten Inhalt an die ausgewählte Einheit in Read-only-Form aushändigt.

12. Gerät (6) nach Anspruch 11, umfassend eine Wiederverschlüsselungseinrichtung (24, 26) zum Wiederverschlüsseln von Material, wobei der entschlüsselte Inhalt als Antwort auf ein Signal von der ausgewählten Einheit wiederverschlüsselt und an die zweite Vorrichtung (12) weitergeleitet wird.

13. Gerät (6) nach Anspruch 9, wobei die Aushändigungseinrichtung (28) so konfiguriert ist, dass sie den entschlüsselten Inhalt an die ausgewählte Einheit in modifizierbarer Form aushändigt.

14. Gerät (6) nach Anspruch 13, wobei die Aushändigungseinrichtung (28) eine Empfangseinrichtung enthält zum Empfangen von Inhalt von der ausgewählten Einheit.

15. Gerät (6) nach Anspruch 14, umfassend eine Wiederverschlüsselungseinrichtung (24, 26) zum Wiederverschlüsseln von Material, wobei der von der ausgewählten Einheit empfangene Inhalt wiederverschlüsselt und an die zweite Vorrichtung (12) weitergeleitet wird.

16. Gerät (6) nach Anspruch 1, umfassend eine Übermittlungsblockiereinrichtung zum Blockieren der Aushändigung von mindestens einem Teil der Übermittlung an die zweite Vorrichtung (12).

17. Gerät (6) nach Anspruch 1, wobei die Ermittlungseinrichtung (16.1, 20) so konfiguriert ist, dass sie vorläufig ermittelt, das eine Übermittlung entschlüsselt werden muss und dann nachträglich ermittelt, dass diese nicht entschlüsselt werden muss, wobei die Ermittlungseinrichtung (16.1, 20) dann so konfiguriert ist, dass sie zunächst einen Verfahrensweise-Anhang liefert, der anzeigt, dass eine Entschlüsselung erforderlich ist, und danach einen modifizierten Anhang, dass eine Entschlüsselung nicht erforderlich ist.

18. Gerät (6) nach Anspruch 1, umfassend eine Erkennungseinrichtung zum Erkennen einer sicheren Übermittlung.

19. Verfahren zur Abwicklung einer sicheren digitalen elektronischen Übermittlung von einer ersten Vorrichtung zu einer zweiten Vorrichtung, wobei das Verfahren von einem Gerät (6) ausgeführt wird und Folgendes umfasst:
Ermitteln, ob die Übermittlung entschlüsselt werden muss;
Zuweisen einer ID für jede Übermittlung von der ersten Vorrichtung, wenn die Übermittlung eingeleitet wird, und zum nachträglichen Identifizieren der ID einer Übermittlung;
Bereitstellen eines Verfahrensweise-Anhangs für jede Übermittlung, der mit der ID dieser Übermittlung verbunden ist, wobei der Anhang anzeigt, ob irgendein Inhalt entschlüsselt werden muss oder nicht;
Einholen von Information, die zum Entschlüsseln des verschlüsselten Inhalts benötigt wird, von der ersten oder der zweiten Vorrichtung oder von beiden, wenn eine Entschlüsselung des verschlüsselten Inhalts erforderlich ist;
Entschlüsseln des verschlüsselten Inhalts der Übermittlung, wenn eine Entschlüsselung erforderlich ist; und Aushändigen des entschlüsselten Inhalts an eine Einheit.

20. Verfahren nach Anspruch 19, umfassend die Wiederverschlüsselung von Material, das an die zweite Vorrichtung gesendet werden soll.

21. Verfahren nach Anspruch 20, umfassend das Ermitteln, ob Material in Verbindung mit einer Übermittlung wiederverschlüsselt werden muss, und das Bereitstellen eines Verfahrensweise-Anhangs, der anzeigt, dass das Material wiederverschlüsselt werden muss.

22. Verfahren nach Anspruch 19, umfassend das Senden von mindestens einem Teil des ursprünglichen verschlüsselten Inhalts einer Übermittlung an die zweite Vorrichtung über einen Nebenschlussweg.

23. Verfahren nach Anspruch 22, umfassend das Ermitteln, ob der ursprüngliche verschlüsselte Inhalt oder ein Teil davon an die zweite Vorrichtung über den Nebenschlussweg geschickt werden sollte, und Bereitstellen eines Verfahrensweise-Anhangs, der anzeigt, dass diese Übermittlung auf dem rensweise-Anhangs, der anzeigt, dass diese Übermittlung auf dem Nebenschlussweg gesendet werden sollte.

24. Verfahren nach Anspruch 19, wobei die Ermittlung, ob eine Übermittlung entschlüsselt werden muss, erfolgt, wenn die Übermittlung eingeleitet wird.

25. Verfahren nach Anspruch 19, wobei die Ermittlung, ob eine Übermittlung entschlüsselt werden muss, nach dem Einleiten der Übermittlung erfolgt.

26. Verfahren nach Anspruch 24 oder Anspruch 25, umfassend das nachträgliche Ermitteln, dass die Übermittlung nicht entschlüsselt werden muss, und das Beenden der Entschlüsselung, nachdem zunächst ermittelt wurde, dass eine Entschlüsselung erfolgen sollte.

27. Verfahren nach Anspruch 19, umfassend das Verarbeiten, einer Speichern oder Weiterleiten des entschlüsselten Inhalts durch die Einheit.

28. Verfahren nach Anspruch 19, wobei der entschlüsselte Inhalt an eine Anzahl von Einheiten ausgehändigt werden kann, umfassend das Ermitteln einer ausgewählten Einheit, an die zumindest ein Teil des entschlüsselten Inhalts ausgehändigt werden sollte und das Bereitstellen eines Verfahrensweise-Anhangs, der anzeigt, dass zumindest ein Teil des entschlüsselten Inhalts an die ausgewählte Einheit ausgehändigt werden muss.

29. Verfahren nach Anspruch 28, wobei der entschlüsselte Inhalt an die ausgewählte Einheit in Read-only-Form ausgehändigt wird.

30. Verfahren nach Anspruch 29, umfassend eine Wiederverschlüsselung des entschlüsselten Inhalts und das Weiterleiten des wiederverschlüsselten Inhalts an die zweite Vorrichtung als Antwort auf ein Signal von der ausgewählten Einheit.

31. Verfahren nach Anspruch 28, wobei der entschlüsselte Inhalt an die ausgewählte Einheit in modifizierbarer Form ausgehändigt wird.

32. Verfahren nach Anspruch 31, umfassend das Empfangen von Inhalt von der ausgewählten Einheit.

33. Verfahren nach Anspruch 32, umfassend das Wiederverschlüsseln des von der ausgewählten Einheit empfangenen Inhalts und das Weiterleiten des Inhalts an die zweite Vorrichtung.

34. Verfahren nach Anspruch 19, umfassend das Blockieren der Weiterleitung von mindestens einem Teil der Übermittlung an die zweite Vorrichtung.

35. Verfahren nach Anspruch 19, umfassend das vorläufige Ermitteln, dass eine Übermittlung entschlüsselt werden muss, und das nachträgliche Ermitteln, dass diese nicht entschlüsselt werden muss, und zudem die anfängliche Bereitstellung eines Verfahrensweise-Anhangs, der anzeigt, dass eine Entschlüsselung erforderlich ist, und danach eines modifizierten Anhangs, dass eine Entschlüsselung nicht erforderlich ist.

36. Verfahren nach Anspruch 19, umfassend das Erkennen, dass es sich bei einer Übermittlung um eine gesicherte Übermittlung handelt.

37. System, umfassend eine erste Vorrichtung, eine zweite Vorrichtung und ein Gerät nach einem der Ansprüche 1 bis 18.

## Revendications

1. Appareil (6) pour traiter une transmission électronique numérique sécurisée d'un premier dispositif (10) à un deuxième dispositif (12), qui comporte :
un moyen de détermination (16.1, 20) pour déterminer si la transmission doit être décryptée ;
un moyen (22) d'obtention d'informations de décryptage pour obtenir des informations nécessaires pour décrypter le contenu crypté, à partir du premier ou du deuxième dispositif (10, 12) ou des deux, si le décryptage du contenu crypté est nécessaire ;
un moyen de décryptage (24, 26) pour décrypter le contenu crypté de la transmission si le décryptage est nécessaire ; et
un moyen de déploiement (28) pour déployer au moins une partie du contenu décrypté vers une entité ;
l'appareil étant **caractérisé en ce qu'**il comprend en outre :
un moyen (16.1) identifiant et fournissant un ID de transmission pour fournir un ID à chaque transmission depuis le premier dispositif (10) au moment de son initiation et pour identifier par la suite l'ID d'une transmission ;
et **en ce que** le moyen de détermination est également destiné à fournir une étiquette de règles pour chaque transmission, qui est associée à l'ID de cette transmission, l'étiquette indiquant s'il y a un contenu quelconque à décrypter.

2. Appareil (6) revendiqué dans la revendication 1, qui comporte un moyen de recryptage (24, 26) pour recrypter un message à envoyer au deuxième dispositif (12).

3. Appareil revendiqué dans la revendication 2, dans lequel le moyen de détermination (16.1, 20) est également configuré pour déterminer si un message associé à une transmission doit être recrypté et pour fournir une étiquette de règles qui indique que le message doit être recrypté.

4. Appareil (6) revendiqué dans la revendication 1, qui comporte un moyen de contournement (18) pour acheminer au moins une partie du contenu crypté original d'une transmission vers le deuxième dispositif (12).

5. Appareil (6) revendiqué dans la revendication 4, dans lequel le moyen de détermination (16.1, 20) est également configuré pour déterminer si le contenu crypté original, ou une partie de celui-ci, devrait être fourni au deuxième dispositif (12) par le biais du moyen de contournement (18) et pour fournir un étiquette de règles qui indique que cette transmission peut être contournée.

6. Appareil (6) revendiqué dans la revendication 1, dans lequel le moyen de détermination (16.1, 20) est configuré pour déterminer si une transmission doit être décryptée, lorsque la transmission est initiée.

7. Appareil (6) revendiqué dans la revendication 1, dans lequel le moyen de détermination (16.1, 20) est configuré pour déterminer si une transmission doit être décryptée, suite à une initiation de la transmission.

8. Appareil (6) revendiqué dans la revendication 6 ou la revendication 7, dans lequel le moyen de détermination (16.1, 20) est configuré pour déterminer par la suite que la transmission doit être décryptée et le décryptage est achevé après qu'il a été déterminé que le décryptage doit avoir lieu.

9. Appareil (6) revendiqué dans la revendication 1, dans lequel l'entité est sélectionnée dans le groupe comprenant un moyen de traitement (30), un moyen de stockage (32) et un moyen de transfert (34).

10. Appareil (6) revendiqué dans la revendication 9, dans lequel le moyen de détermination (16.1, 20) est également configuré pour déterminer l'entité sélectionnée vers laquelle le contenu décrypté doit être déployé et pour fournir une étiquette de règles qui indique l'identité de l'entité sélectionnée.

11. Appareil (6) revendiqué dans la revendication 9, dans lequel le moyen de déploiement (28) est configuré pour déployer le contenu décrypté vers l'entité sélectionnée en lecture seule.

12. Appareil (6) revendiqué dans la revendication 11, qui comporte un moyen de recryptage (24, 26) pour recrypter un message et dans lequel le contenu décrypté est recrypté et est envoyé au deuxième dispositif (12) en réponse à un signal provenant de l'entité sélectionnée.

13. Appareil (6) revendiqué dans la revendication 9, dans lequel le moyen de déploiement (28) est configuré pour déployer le contenu décrypté à l'entité sélectionnée sous une forme modifiable.

14. Appareil (6) revendiqué dans la revendication 13, dans lequel le moyen de déploiement (28) comporte un moyen de réception pour recevoir un contenu provenant de l'entité sélectionnée.

15. Appareil (6) revendiqué dans la revendication 14, qui comporte un moyen de recryptage (24, 26) pour recrypter un message et dans lequel le contenu reçu de l'entité sélectionnée est recrypté et envoyé au deuxième dispositif (12).

16. Appareil (6) revendiqué dans la revendication 1, qui comporte un moyen de blocage de transmission pour bloquer le transfert d'au moins une partie de la transmission au deuxième dispositif (12).

17. Appareil (6) revendiqué dans la revendication 1, dans lequel le moyen de détermination (16.1, 20) est configuré pour déterminer provisoirement qu'une transmission doit être décryptée et pour déterminer par la suite qu'elle n'a plus besoin d'être décryptée, le moyen de détermination (16.1, 20) étant ensuite configuré pour fournir initialement une étiquette de règles qui indique qu'un décryptage est nécessaire et ensuite une étiquette modifiée qui indique que le décryptage n'est pas nécessaire.

18. Appareil (6) comme revendiqué dans la revendication 1, qui comporte un moyen de détection pour détecter une transmission sécurisée.

19. Procédé de traitement d'une transmission électronique numérique sécurisée d'un premier dispositif à un deuxième dispositif, le procédé étant exécuté par un appareil (6) et qui comporte le fait :
de déterminer si la transmission doit être décryptée ;
de fournir un ID pour chaque transmission du premier dispositif lorsque celle-ci est initiée et pour identifier par la suite l'ID d'une transmission ;
de fournir une étiquette de règles pour chaque transmission, qui est associée à l'ID de cette transmission, l'étiquette indiquant s'il faut décrypter un contenu quelconque ou non ;
d'obtenir des informations nécessaires pour décrypter le contenu crypté, du premier ou du deuxième dispositif ou des deux, si un décryptage du contenu crypté est nécessaire ;
de décrypter le contenu crypté de la transmission si un décryptage est nécessaire ; et
de déployer le contenu décrypté à une entité.

20. Procédé revendiqué dans la revendication 19, qui comporte le fait de recrypter un message à envoyer au deuxième dispositif.

21. Procédé revendiqué dans la revendication 20, qui comporte le fait de déterminer si un message associé à une transmission doit être recrypté et de fournir une étiquette de règles qui indique que le message doit être recrypté.

22. Procédé revendiqué dans la revendication 19, qui comporte le fait de router au moins une partie du contenu crypté original d'une transmission vers le deuxième dispositif par le biais d'un chemin de contournement.

23. Procédé revendiqué dans la revendication 22, qui comporte le fait de déterminer si le contenu crypté original, ou une partie de celui-ci, doit être routé vers le deuxième dispositif par le biais du chemin de contournement et pour fournir une étiquette de règles qui indique que cette transmission doit être contournée.

24. Procédé revendiqué dans la revendication 19, dans lequel le fait de déterminer si une transmission doit être décryptée se produit lorsque la transmission est initiée.

25. Procédé revendiqué dans la revendication 19, dans lequel le fait de déterminer si une transmission doit être décryptée se produit suite à l'initiation de la transmission.

26. Procédé revendiqué dans la revendication 24 ou la revendication 25, qui comporte par la suite le fait de déterminer que la transmission doit être décryptée et de mettre fin au décryptage après avoir déterminé initialement qu'un décryptage doit avoir lieu.

27. Procédé revendiqué dans la revendication 19, qui comporte le fait de traiter, de stocker ou d'envoyer le contenu décrypté par l'entité.

28. Procédé revendiqué dans la revendication 19, dans lequel le contenu décrypté peut être déployé vers une pluralité d'entités et qui comporte le fait de déterminer une entité sélectionnée vers laquelle au moins une partie du contenu décrypté doit être déployée et de fournir une étiquette de règles qui indique qu'au moins une partie du contenu décrypté doit être déployée vers l'entité sélectionnée.

29. Procédé revendiqué dans la revendication 28, dans lequel le contenu décrypté est déployé vers l'entité sélectionnée en lecture seule.

30. Procédé revendiqué dans la revendication 29, qui comporte le fait de recrypter le contenu décrypté et d'envoyer le contenu recrypté au deuxième dispositif en réponse à un signal provenant de l'entité sélectionnée.

31. Procédé revendiqué dans la revendication 28, dans lequel le contenu décrypté est déployé vers l'entité sélectionnée sous une forme modifiable.

32. Procédé revendiqué dans la revendication 31, qui comporte le fait de recevoir un contenu depuis l'entité sélectionnée.

33. Procédé revendiqué dans la revendication 32, qui comporte le fait de recrypter le contenu reçu depuis l'entité sélectionnée et de l'envoyer au deuxième dispositif.

34. Procédé revendiqué dans la revendication 19, qui comporte le fait de bloquer le transfert d'au moins une partie de la transmission au deuxième dispositif.

35. Procédé revendiqué dans la revendication 19, qui comporte le fait de déterminer provisoirement qu'une transmission doit être décryptée et de déterminer par la suite qu'elle n'a pas besoin d'être décryptée, et aussi de fournir initialement une étiquette de règles qui indique que le décryptage est nécessaire et ensuite une étiquette modifiée qui indique que ce décryptage n'est pas requis.

36. Procédé revendiqué dans la revendication 19, qui comporte le fait de détecter qu'une transmission est une transmission sécurisée.

37. Système comprenant un premier dispositif, un deuxième dispositif et un appareil comme revendiqué dans l'une quelconque des revendications 1 à 18.
